# FASCICULE DE BREVET EUROPEEN

(11) **EP 2 909 066 B1**
(45) Date de publication et mention de la délivrance du brevet: **08.06.2016**
(21) Numéro de dépôt: 13789599.1
(22) Date de dépôt: 17.09.2013
(51) Int. Cl.: B60T 1/06, F16H 59/02, F16H 63/34, F16H 63/48, F16H 3/14

(54) **ENSEMBLE DE TRANSMISSION POUR ENGIN AUTOMOTEUR, DU TYPE POSITIONNABLE ENTRE L'ARBRE PRIMAIRE MOTEUR ET LES ROUES DUDIT ENGIN**
GETRIEBEANORDNUNG FÜR EINE SELBSTFAHRENDE MASCHINE ZUR POSITIONIERUNG ZWISCHEN DER HAUPTMOTORWELLE UND DEN RÄDERN DIESER MASCHINE
TRANSMISSION ASSEMBLY FOR A SELF-PROPELLED MACHINE, OF THE TYPE THAT CAN BE POSITIONED BETWEEN THE PRIMARY MOTOR SHAFT AND THE WHEELS OF SAID MACHINE

(30) Priorité: 18.10.2012 FR 1259919
(43) Date de publication de la demande: 26.08.2015
(73) Titulaire: France Reducteurs, 85500 Les Herbiers (FR)
(72) Inventeur: BLANCHARD, Robert, F-85510 Le Boupere (FR)
(74) Mandataire: Godineau, Valérie
(86) Numéro de dépôt international: PCT/FR2013/052122
(87) Numéro de publication internationale: WO 2014/060663

(56) Documents cités:
- EP-A1- 1 946 983
- EP-A2- 1 516 791
- WO-A1-2009/061391
- FR-A1- 2 940 773
- US-A- 5 394 764
- US-A1- 2006 172 857

## Description

La présente invention concerne un ensemble de transmission pour engin automoteur, du type positionnable entre l'arbre primaire moteur et les roues dudit engin (Voir FR2940773A).

Elle concerne plus particulièrement un ensemble de transmission comprenant un boîtier de transmission équipé d'un arbre d'entrée, apte à être entraîné en rotation par l'arbre primaire suivant une seule et même direction, et un arbre de sortie, tel que l'arbre d'entraînement des roues de l'engin, auquel le mouvement de l'arbre d'entrée est apte à être transmis, un mécanisme inverseur de sens d'entraînement en rotation de l'arbre de sortie, un mécanisme de frein de l'arbre d'entrée et/ou de l'arbre de sortie et/ou des moyens de transmission de mouvement entre l'arbre d'entrée et l'arbre de sortie, chaque mécanisme comportant une commande, lesdites commandes d'inversion de sens et de frein portées par ledit boîtier, étant montées respectivement mobiles l'une, entre au moins trois positions, à savoir une position neutre, une position marche avant et une position marche arrière, l'autre, entre au moins une position dite première position de freinage et une position non freinée, ladite commande de frein étant couplable à un organe de commande de frein actionnable par l'opérateur, pour le passage de ladite commande de frein de la position non freinée à ladite première position de freinage sous l'action dudit organe de commande de frein actionnable par l'opérateur.

Les petits engins automoteurs de type tracteur de tonte, chasse-neige se sont largement développés ces dernières années sur le marché. Jusqu'à présent, de tels engins sont équipés d'un organe, tel qu'une pédale de frein, actionnable par l'opérateur pour le passage de la position non freinée à la position freinée et d'un frein de parking indépendant. Eu égard aux travaux à effectuer, tels que la tonte, le conducteur de l'engin est amené à descendre fréquemment de son engin. Il a été constaté que le conducteur oublie fréquemment d'actionner son frein de parking préalablement à sa sortie de l'engin de sorte qu'il existe un risque d'accident.

Un but de la présente invention est donc de proposer un ensemble de transmission dont la conception permet l'actionnement automatique d'un frein de parking sans intervention spécifique du conducteur sur les commandes de frein.

Un autre but de la présente invention est de proposer un ensemble de transmission de conception simplifiée, les mécanismes de frein de route et de parking étant communs.

A cet effet, l'invention a pour objet un ensemble de transmission pour engin automoteur, du type positionnable entre l'arbre primaire moteur et les roues dudit engin et comprenant un boîtier de transmission équipé d'un arbre d'entrée apte à être entraîné en rotation par l'arbre primaire suivant une seule et même direction et un arbre de sortie, tel que l'arbre d'entraînement des roues de l'engin, auquel le mouvement de l'arbre d'entrée est apte à être transmis, un mécanisme inverseur de sens d'entraînement en rotation de l'arbre de sortie, un mécanisme de frein de l'arbre d'entrée et/ou de l'arbre de sortie et/ou des moyens de transmission de mouvement entre l'arbre d'entrée et l'arbre de sortie, chaque mécanisme comportant une commande, lesdites commandes d'inversion de sens et de frein portées par ledit boîtier, étant montées respectivement mobiles l'une, entre au moins trois positions, à savoir une position neutre, une position marche avant et une position marche arrière, l'autre, entre au moins une position dite première position de freinage et une position non freinée, ladite commande de frein étant couplable à un organe de commande de frein actionnable par l'opérateur, pour le passage de ladite commande de frein de la position non freinée à ladite première position de freinage sous l'action dudit organe de commande de frein actionnable par l'opérateur, caractérisé en ce que la commande de frein présente une deuxième position de freinage distincte de la première position de freinage et en ce que l'ensemble de transmission comprend d'une part des moyens de rappel, lesdits moyens de rappel étant aptes, en position neutre de la commande d'inversion de sens, à rappeler ladite commande de frein en deuxième position de freinage, et d'autre part des moyens d'entraînement en déplacement de la commande de frein de la deuxième position de freinage à la position non freinée, ces moyens d'entraînement en déplacement de la commande de frein étant formés au moins partiellement par la commande d'inversion de sens active sur ladite commande de frein, à l'encontre des moyens de rappel lors du passage de ladite commande d'inversion de sens de la position neutre à la position marche avant ou marche arrière.

La présence de moyens de rappel aptes, en position neutre de la commande d'inversion de sens, à rappeler la commande de frein en deuxième position de freinage, permet un actionnement automatique de la commande de frein lorsque le conducteur actionne la commande d'inversion de sens et l'amène en position neutre. Il en résulte l'absence de nécessité pour le conducteur de commander de manière indépendante la commande de frein. De même, la conception de la commande d'inversion de sens configurée pour permettre, lors de son passage de la position neutre à la position marche avant ou marche arrière, le passage automatique de la commande de frein de la deuxième position de freinage à la position non freinée permet au conducteur de ne pas avoir à se préoccuper du desserrage des freins au moment où il décide d'avancer ou de reculer avec ledit engin. Il en résulte une simplicité de la conduite de l'engin tout en augmentant la sécurité de l'ensemble. La commande d'inversion de sens est donc configurée pour, en position neutre, autoriser le passage de la commande de frein de la position non freinée à la deuxième position de freinage et commander le passage de la commande de frein de la deuxième position de freinage à la position non freinée lors de son passage de la position neutre à la position marche avant ou marche arrière.

De préférence, le mécanisme de frein comporte une commande supplémentaire, dite additionnelle, actionnable par l'opérateur entre une position inactive et une position active, cette commande additionnelle étant, au cours de son activation, apte, en deuxième position de freinage de la commande de frein, à coopérer avec la commande de frein, pour le passage de la commande de frein de la deuxième position de freinage à la position non freinée.

Cette commande additionnelle permet de déplacer l'engin, par exemple en le poussant ou en le tirant, lorsque l'engin est à l'arrêt et que les organes de commande de frein, tels que la pédale de frein actionnable par l'opérateur, sont inaccessibles. Tel est le cas lorsque par exemple l'engin est rangé dans un abri. Cette commande additionnelle est généralement positionnée à l'extérieur de l'engin à l'arrière dudit engin et est actionnée de préférence à la main par l'opérateur.

De préférence, la commande de frein est disposée, au moins partiellement, sur la trajectoire suivie par la commande additionnelle au cours de son activation, pour permettre, parallèlement à l'activation de la commande additionnelle, le passage de la commande de frein de la deuxième position de freinage à la position non freinée par simple contact d'appui.

De préférence, le mécanisme de frein, monté sur l'arbre d'entrée ou l'arbre de sortie ou un arbre des moyens de transmission entre arbre d'entrée et arbre de sortie, comprend au moins une paire de pièces, à surface conique sensiblement coaxiales, aptes à être enfilées sur ledit arbre et montées l'une, dite cône mâle, solidaire en rotation dudit arbre, l'autre, dite cône femelle, fixe en rotation par rapport audit arbre, le cône femelle affectant la forme d'une roue à alésage axial à portée conique et le cône mâle, de préférence de forme générale tronconique, étant évidé centralement pour pouvoir être enfilé sur ledit corps, et la commande de frein est apte à commander les cônes en déplacement relatif axial dans le sens d'un rapprochement ou d'un écartement, le cône mâle étant, en position rapprochée desdits cônes, correspondant à la position de freinage, logé à l'intérieur de l'alésage axial du cône femelle, avec sa surface périphérique externe conique en prise, par contact d'appui, avec la portée conique du cône femelle.

Généralement, la commande de frein et la commande d'inversion de sens comprennent chacune au moins une pièce mobile dite commandée, lesdites pièces mobiles commandées étant respectivement couplables par un moyen de transmission de mouvement l'une à l'organe de commande de frein actionnable par l'opérateur, l'autre, à un organe de commande d'inversion de sens actionnable par l'opérateur.

De préférence, la pièce mobile commandée de la commande d'inversion de sens est une came linéaire ou rotative et la pièce mobile commandée de la commande de frein est un levier pivotant sollicité par les moyens de rappel de la commande de frein dans une position d'appui contre le profil externe de la came, ladite came étant conformée pour, au cours de son déplacement de la position neutre vers la position marche avant ou la position marche arrière, agir, à l'encontre des moyens de rappel, sur le levier, dans le sens d'un déplacement du levier.

Généralement, le levier pivotant et la came sont montés à rotation autour d'axes parallèles.

De préférence, la commande de frein comprend encore une fourchette à deux branches couplée de manière solidaire en rotation à la pièce mobile commandée, chaque branche de la fourchette étant munie d'une dent radiale interne formant la partie active de la fourchette positionnable au voisinage d'au moins l'un desdits cônes pour un déplacement desdits cônes en rapprochement.

De préférence, le mécanisme inverseur de sens porté par l'un des arbres, de préférence l'arbre d'entrée, comprend deux éléments de crabot dits l'un, crabot marche avant, l'autre, crabot marche arrière, et un crabot mobile interposé entre les éléments de crabot marche avant et marche arrière, lesdits éléments de crabot marche avant et marche arrière étant montés couplables/désaccouplables en rotation de l'arbre qui les porte par l'intermédiaire du crabot monté mobile axialement sur ledit arbre à l'aide de la commande d'inversion de sens pour pouvoir occuper une position marche avant dans laquelle le crabot mobile est en prise avec l'élément de crabot marche avant, une position marche arrière dans laquelle le crabot mobile est en prise avec l'élément de crabot marche arrière ou une position neutre dans laquelle le crabot mobile n'est en prise avec aucun des éléments de crabot marche avant ou marche arrière.

De préférence, l'ensemble de transmission comporte encore un arbre dit menant apte à être entraîné en rotation par l'arbre primaire moteur, cet arbre menant étant relié audit arbre d'entrée formant l'arbre mené par une transmission sans fin à courroie et, disposé entre l'arbre menant et l'arbre de sortie, un mécanisme d'embrayage équipé d'une commande d'embrayage montée mobile entre au moins une position embrayée et une position débrayée, la commande d'inversion de sens forme, en position neutre de ladite commande, un moyen de blocage de la commande d'embrayage apte à empêcher le passage de la commande d'embrayage de la position débrayée à la position embrayée, et la commande d'embrayage forme, en position embrayée de la commande d'embrayage, un moyen de verrouillage de la commande d'inversion de sens apte à empêcher le passage de la commande d'inversion de sens de la position marche avant ou marche arrière à la position neutre.

Cette disposition permet d'imposer une cinématique de fonctionnement. En effet, le fait que la commande d'inversion de sens forme, en position neutre de ladite commande, un moyen de blocage de la commande d'embrayage oblige le conducteur à commander la commande d'inversion de sens et à sélectionner le sens de déplacement en marche avant ou marche arrière de l'engin avant tout embrayage pour éviter les à-coups. De la même manière, le fait que la commande d'embrayage forme, en position embrayée de la commande d'embrayage, un moyen de verrouillage de la commande d'inversion de sens, oblige le conducteur à commander la commande de débrayage avant de revenir à la position neutre et d'éventuellement inverser le sens de déplacement de l'engin de sorte que tout risque de détérioration est évité.

De préférence, la commande d'embrayage comprend au moins une pièce mobile commandée, portée par le boîtier, et couplable par un moyen de transmission de mouvement à un organe de commande d'embrayage actionnable par l'opérateur, et les pièces mobiles commandées de la commande d'embrayage et de la commande d'inversion de sens sont munies respectivement l'une, d'un organe de verrouillage, l'autre, de deux organes de verrouillage complémentaires aptes à coopérer alternativement avec l'organe de verrouillage de la commande d'embrayage, en fonction de la position marche avant ou marche arrière de la commande d'inversion de sens.

De préférence encore, le mécanisme d'embrayage est intégré à la transmission à courroie.

Généralement, la transmission à courroie est du type à variation de vitesse et comprend deux poulies à flasques à écartement variable portées l'une, dite menante, par l'arbre menant, l'autre, dite menée, par l'arbre d'entrée et des moyens de commande en rapprochement ou en écartement des flasques de la poulie menante, le mécanisme d'embrayage comprend un organe fou apte à coopérer avec le flasque mobile de la poulie menante commandée, cet organe fou, tel qu'un roulement, un galet, ou une bague, présentant une surface montée libre à rotation sur l'arbre porteur de la poulie commandée et autour de laquelle s'enroule au moins partiellement la courroie en position écartée des flasques de la poulie menante commandée de manière à empêcher toute transmission de mouvement entre arbres porte-poulie, le flasque mobile de la poulie menante commandée venant à recouvrement dudit organe fou au cours du rapprochement des flasques de ladite poulie pour permettre l'enroulement de la courroie à l'intérieur de la gorge ménagée par les flasques et autoriser le passage du variateur de vitesse d'une position débrayée à une position embrayée, la poursuite du rapprochement des flasques de la poulie menante commandée autorisant la variation à volonté de la vitesse, et les moyens de commande en rapprochement ou en écartement des flasques de la poulie menante sont au moins partiellement communs à la commande d'embrayage.

L'organe de commande d'embrayage, actionnable par l'opérateur, est commun à l'organe de commande d'inversion de sens actionnable par l'opérateur ou est distinct dudit organe de commande d'inversion de sens.

L'invention a encore pour objet un engin automoteur du type comprenant un arbre primaire moteur, des roues, et un ensemble de transmission disposé entre l'arbre primaire moteur et les roues, caractérisé en ce que l'ensemble de transmission est du type précité.

L'invention sera bien comprise à la lecture de la description suivante d'exemples de réalisation, en référence aux dessins annexés dans lesquels :

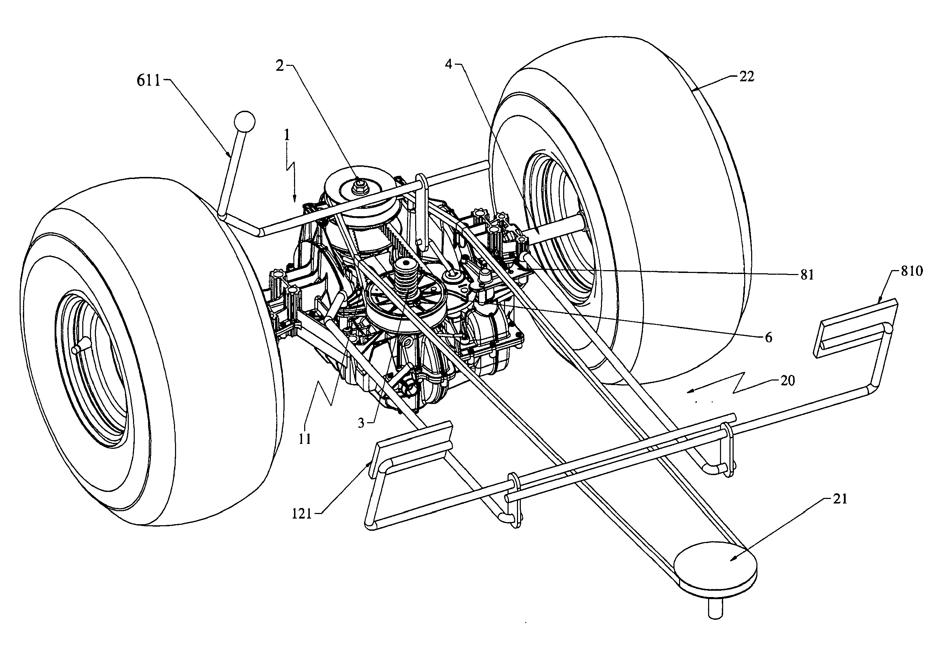

la figure 1 représente une vue en perspective d'un engin équipé d'un ensemble de transmission conforme à l'invention, la carrosserie de l'engin ayant été omise ;

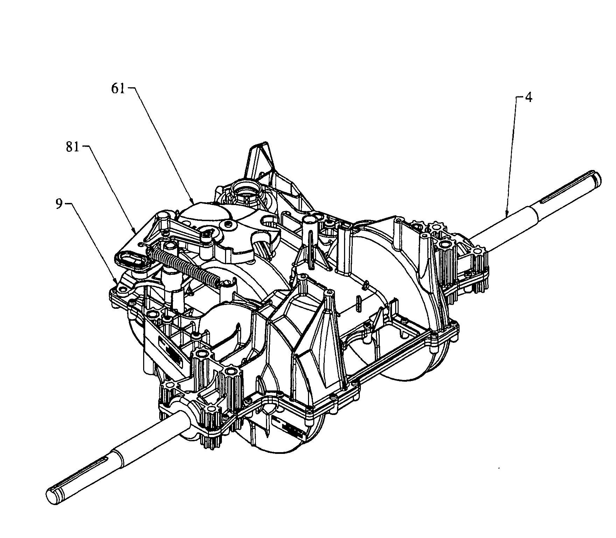

la figure 2 représente une vue en perspective d'un ensemble de transmission conforme à l'invention ;

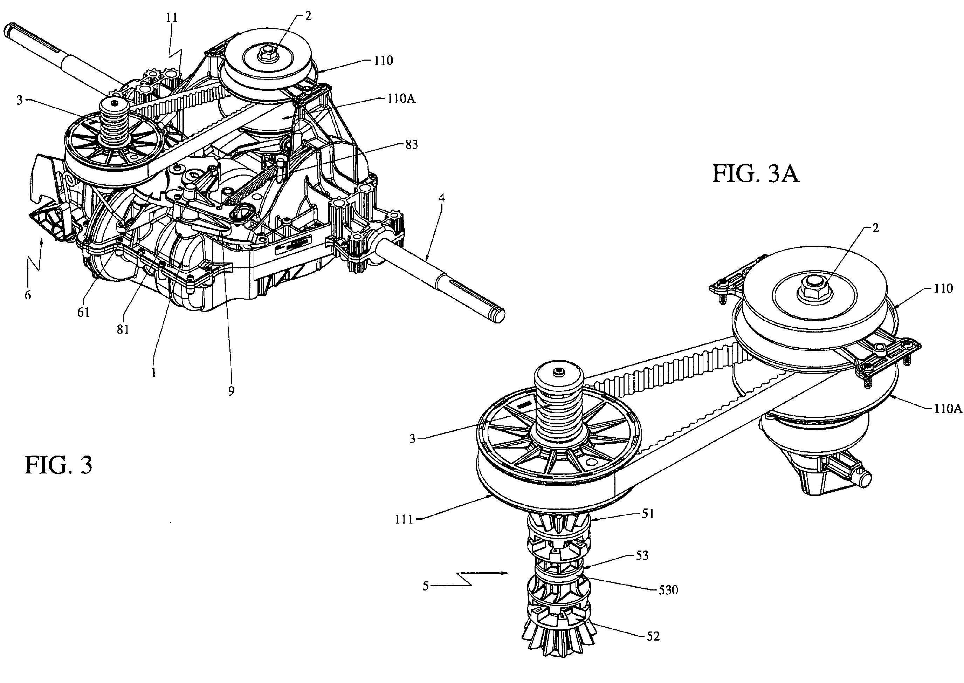

la figure 3 représente une vue en perspective d'un ensemble de transmission conforme à l'invention prise sous un autre angle ;
la figure 3A représente une vue partielle en perspective du mécanisme inverseur et du mécanisme d'embrayage intégré à un mécanisme de variation de vitesse ;
la figure 4 représente une vue partielle en perspective des commandes d'embrayage et d'inversion de sens associées à leurs mécanismes ;

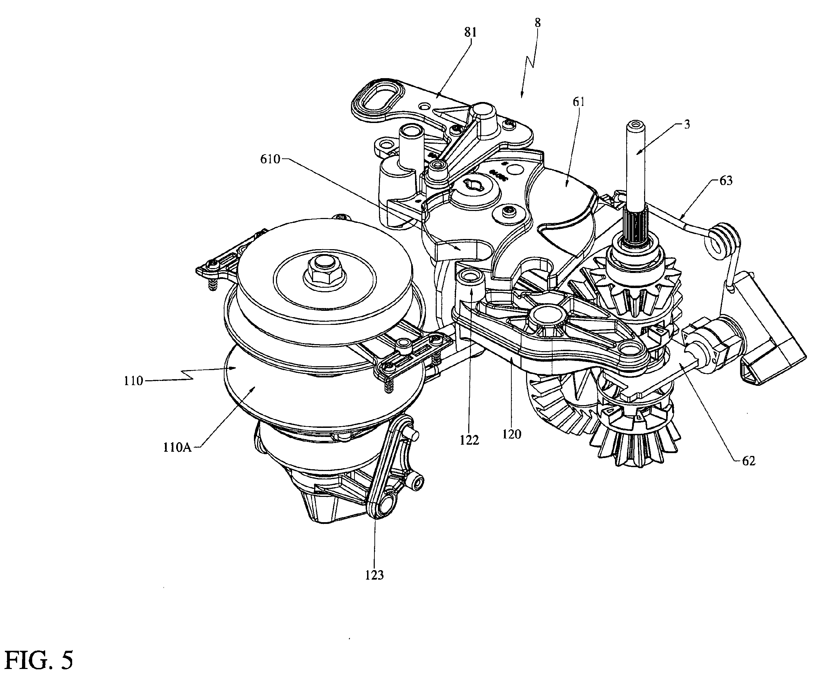

la figure 5 représente une vue partielle en perspective prise sous un autre angle des mécanismes d'embrayage et d'inversion de sens associés à leurs commandes ;

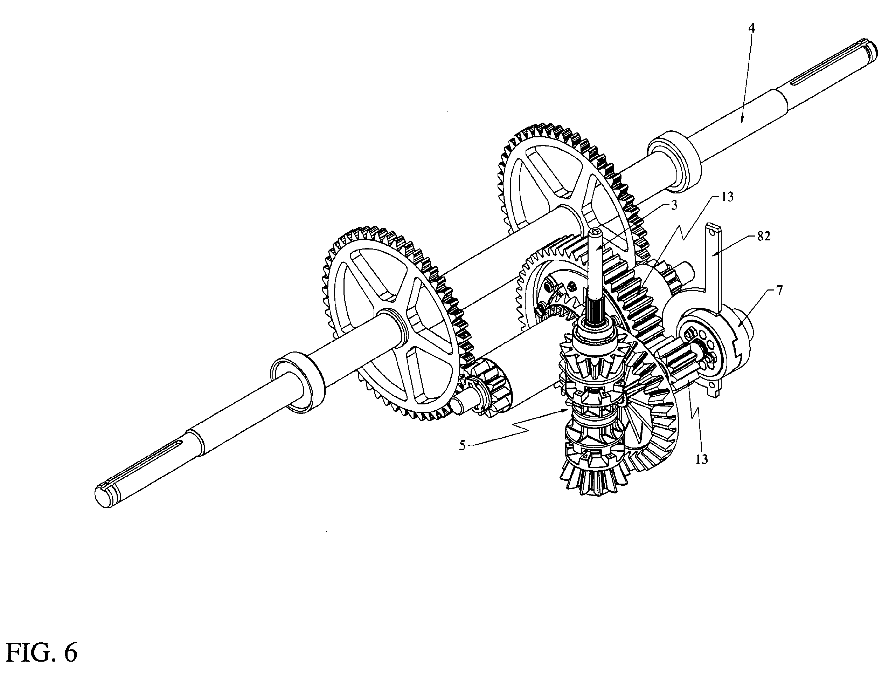

la figure 6 représente une vue partielle en perspective des moyens de transmission de mouvement entre l'arbre d'entrée et l'arbre de sortie ;

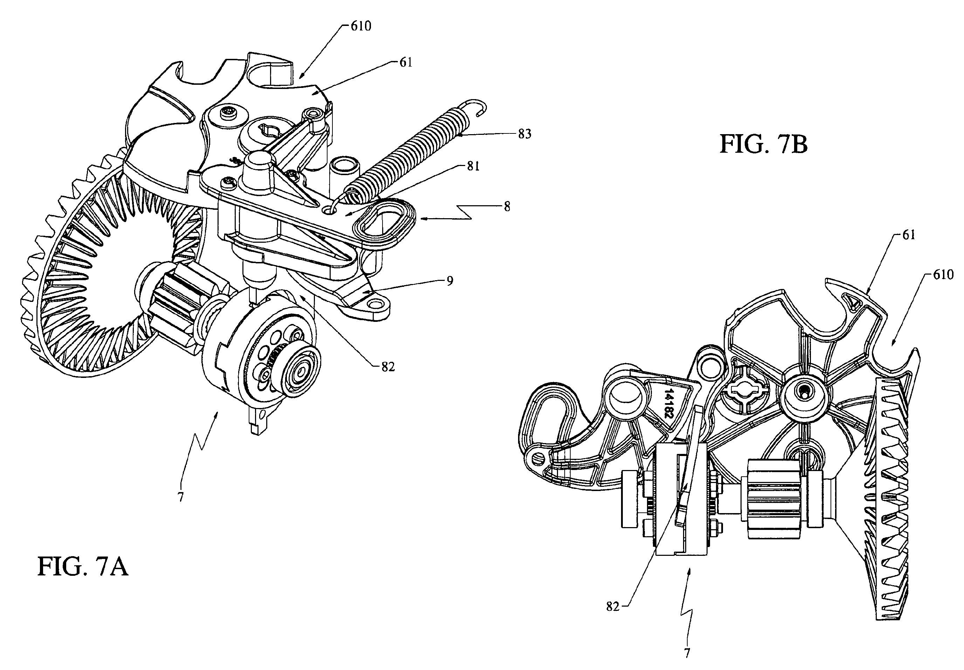

les figures 7A et 7B représentent respectivement en vue en perspective et en vue de dessous les commandes d'inversion de sens et de freinage associées aux mécanismes de frein en deuxième position de freinage de la commande de frein ;

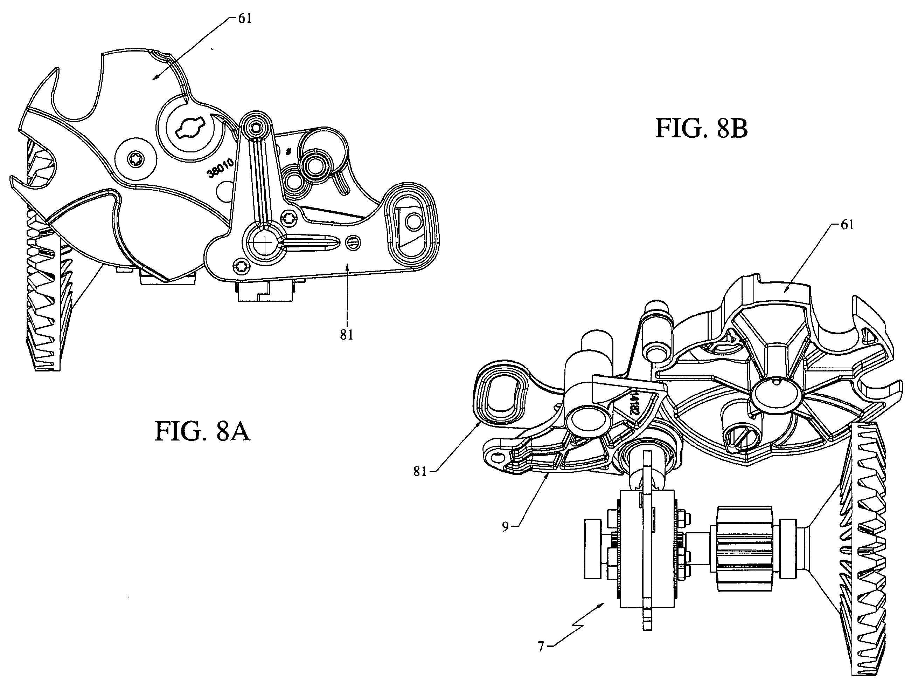

les figures 8A et 8B représentent respectivement en vue de dessus et en vue en perspective les commandes d'inversion de sens et de frein associées au mécanisme de frein en position marche avant de la commande d'inversion de sens et en position non freinée du dispositif de freinage ;

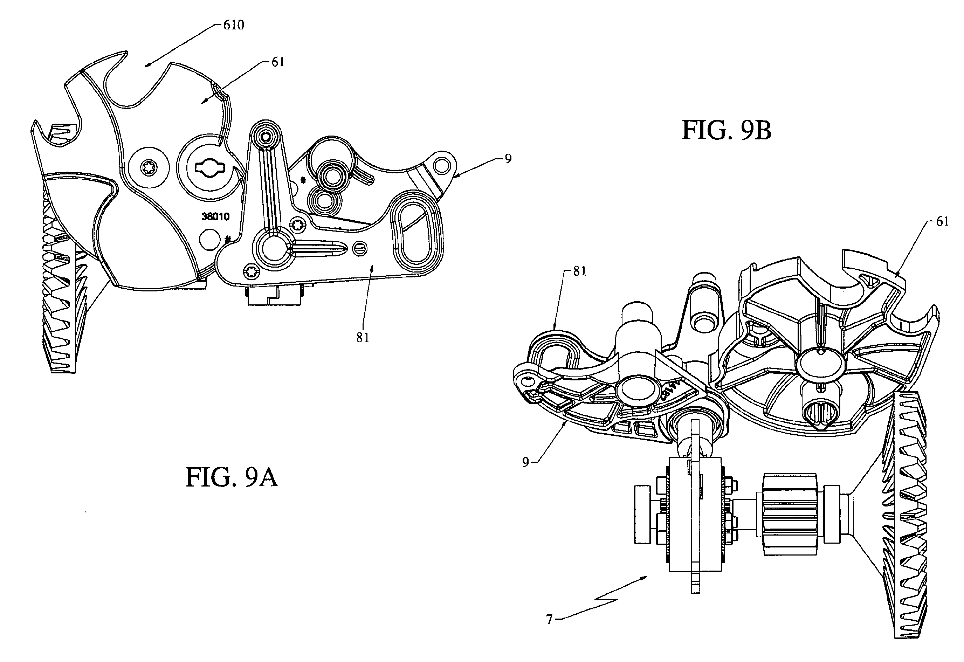

les figures 9A et 9B représentent respectivement en vue de dessus et en vue partielle en perspective les commandes de frein et d'inversion de sens avec la commande additionnelle en position active dans laquelle la commande de frein est en position non freinée ;

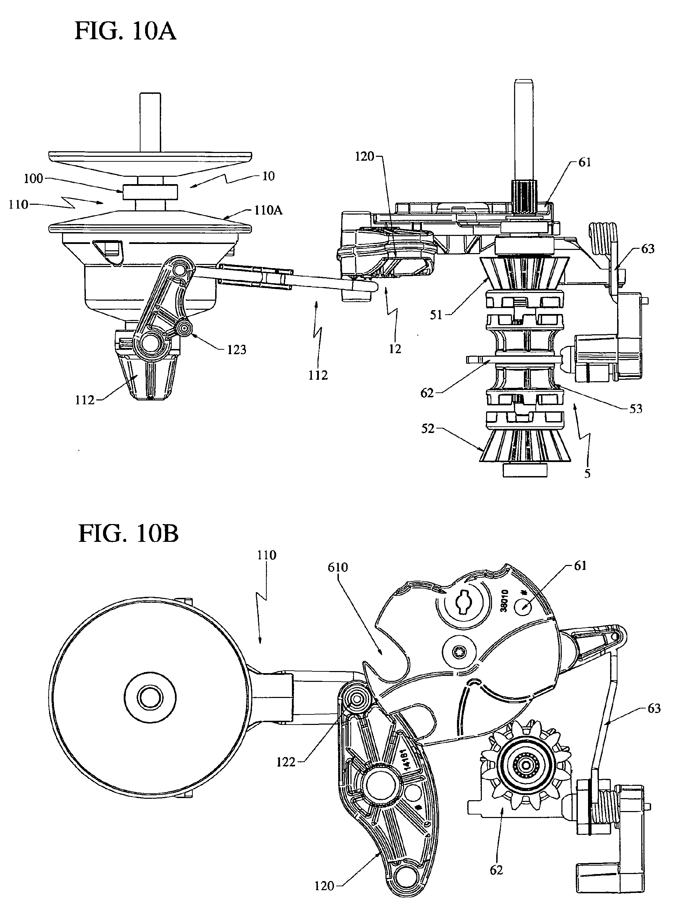

les figures 10A et 10B représentent respectivement en vue de face et en vue de dessus les mécanismes d'inversion de sens et d'embrayage associés à leurs commandes en position neutre de la commande d'inversion de sens et en position débrayée de la commande d'embrayage ;

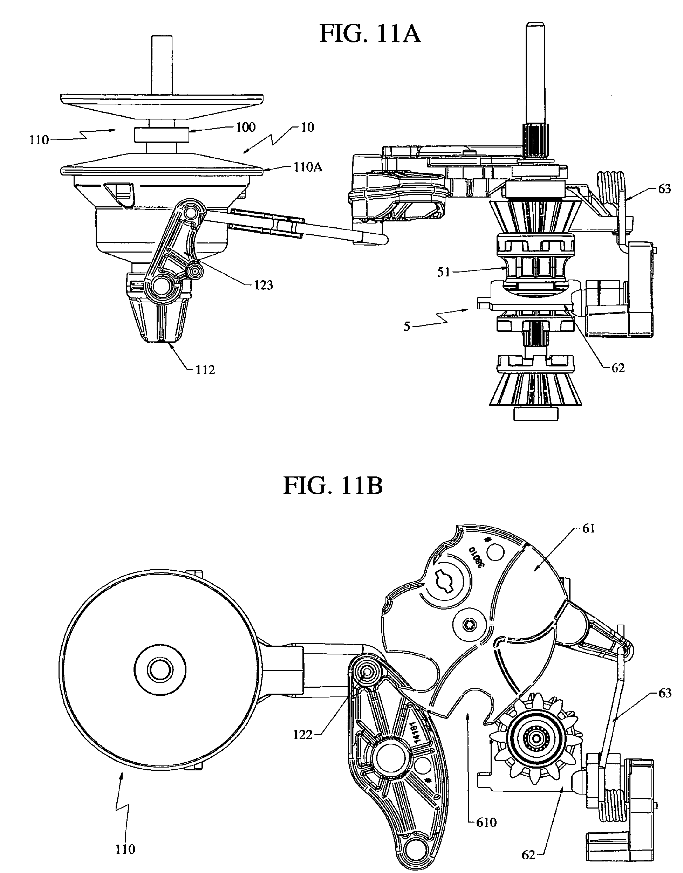

les figures 11A et 11B représentent respectivement en vue de face et en vue de dessus les mécanismes d'inversion de sens et d'embrayage associés à leurs commandes en position marche avant de la commande d'inversion de sens et en position débrayée de la commande d'embrayage ;

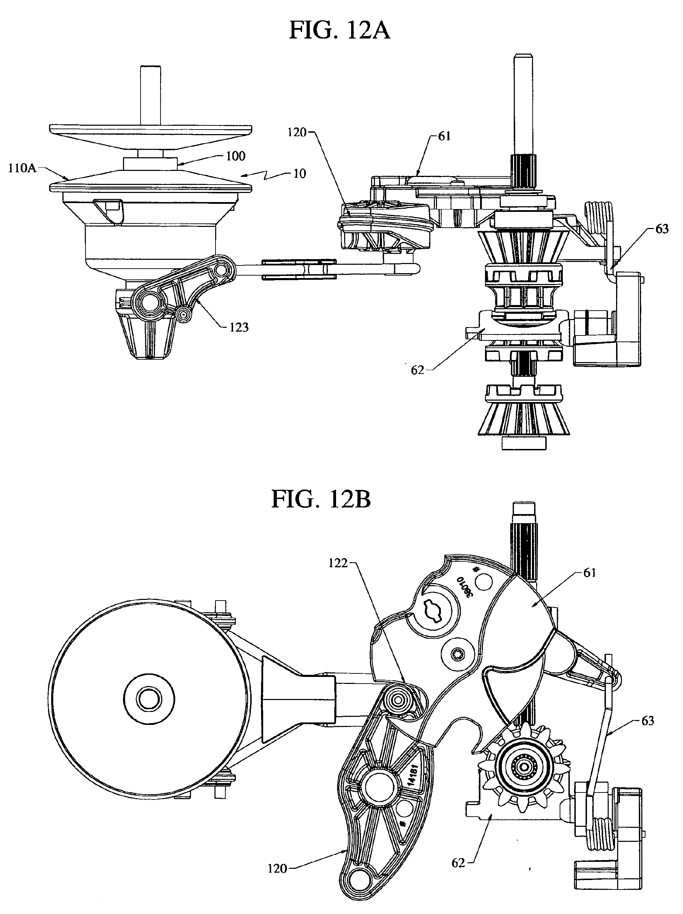

les figures 12A et 12B représentent respectivement en vue de face et en vue de dessus les mécanismes d'inversion de sens et d'embrayage associés à leurs commandes en position marche avant de la commande d'inversion de sens et embrayée de la commande d'embrayage ;

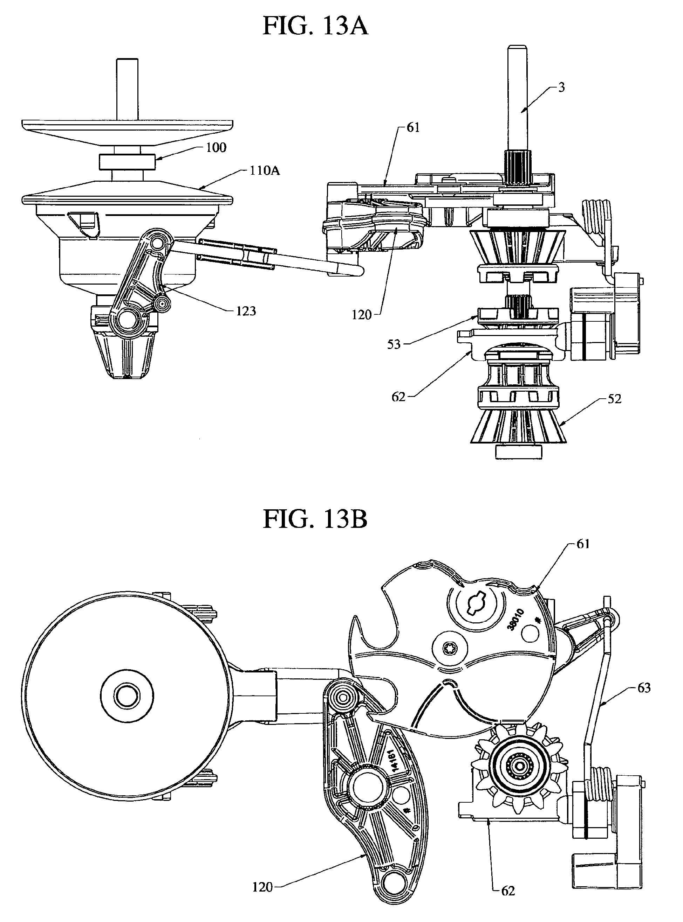

les figures 13A et 13B représentent respectivement en vue de face et en vue de dessus les mécanismes d'inversion de sens et d'embrayage associés à leurs commandes en position marche arrière de la commande d'inversion de sens et en position débrayée de la commande d'embrayage.

Comme mentionné ci-dessus, l'ensemble transmission, objet de l'invention, est destiné à être installé sur un engin 20 automoteur, tel qu'un tracteur de tonte, équipé d'un arbre 21 primaire moteur et de roues 22.

Cet ensemble comprend un boîtier 1 de transmission formé, ici, de deux demi-coquilles assemblées par un plan de joint. Ce boîtier 1 de transmission comprend, faisant saillie au moins partiellement du boîtier 1, un arbre 3 d'entrée et un arbre 4 de sortie qui forme, dans les exemples représentés, l'arbre d'entraînement des roues de l'engin.

L'arbre 3 d'entrée est apte à être entraîné en rotation par l'arbre 21 primaire moteur et à transmettre son mouvement à l'arbre 4 de sortie.

L'ensemble comprend encore un mécanisme 5 inverseur de sens d'entraînement en rotation de l'arbre 4 de sortie, commandé à l'aide d'une commande 6 d'inversion de sens portée par ledit boîtier 1.

Dans les exemples représentés, le mécanisme 5 inverseur de sens est porté par l'arbre 3 d'entrée et comprend deux éléments 51, 52 de crabot, dits l'un, représenté en 51 aux figures, crabot marche avant, l'autre, représenté en 52 aux figures, crabot marche arrière et un crabot 53 mobile interposé entre les éléments 51, 52 de crabot marche avant et marche arrière. Les éléments 51, 52 de crabot marche avant et marche arrière sont montés couplables/désaccouplables en rotation de l'arbre 3 qui les porte par l'intermédiaire du crabot 53 monté mobile axialement sur ledit arbre 3 à l'aide de la commande 6 d'inversion de sens pour pouvoir occuper une position marche avant dans laquelle le crabot 53 mobile est en prise avec l'élément 51 de crabot marche avant, une position marche arrière dans laquelle le crabot 53 mobile est en prise avec l'élément 52 de crabot marche arrière et une position neutre dans laquelle le crabot 53 mobile n'est en prise avec aucun des éléments 51, 52 de crabot marche avant ou marche arrière.

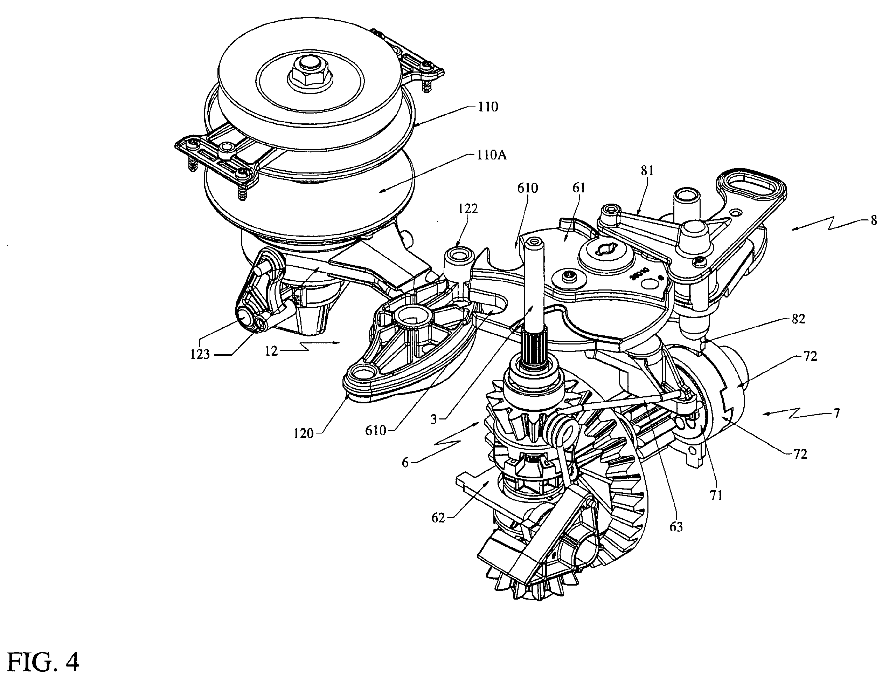

Le mouvement des crabots marche avant/marche arrière est transmis généralement par engrènement à l'arbre 4 de sortie. Un exemple de moyens de transmission de mouvement par engrènement entre l'arbre 3 d'entrée et l'arbre 4 de sortie est représenté à la figure 4. Dans ce mode de réalisation, les mouvements des crabots marche avant et marche arrière sont transmis via une roue montée sur un arbre portant un mécanisme de frein qui sera décrit ci-après à un arbre intermédiaire par l'intermédiaire de pignons, cet arbre intermédiaire transmettant lui-même son mouvement à l'arbre de sortie par l'intermédiaire de pignons supplémentaires venant en prise avec des pignons portés par l'arbre 4 de sortie.

Dans les exemples représentés, le crabot 53 mobile se présente sous forme d'un manchon monté solidaire en rotation de l'arbre 3 d'entrée qui le porte. Ce manchon est muni d'une gorge 530 annulaire périphérique externe. Ce manchon est encore muni, à chacune de ses extrémités, de dents de crabot formant une crénelure circulaire et les éléments 51, 52 de crabot marche avant et marche arrière affectent chacun la forme d'un pignon conique muni sur l'une de ses faces de dents de crabotage.

L'ensemble de transmission comprend encore un mécanisme 7 de frein de l'arbre 3 d'entrée et/ou de l'arbre 4 de sortie et/ou des moyens de transmission de mouvement entre l'arbre 3 d'entrée et l'arbre 4 de sortie. Dans les exemples représentés, le mécanisme 7 de frein est disposé au niveau des moyens de transmission sur un arbre venant en prise par engrènement avec les éléments 51, 52 de crabot marche avant et marche arrière. Ce mécanisme 7 de frein est commandé par une commande 8 de frein portée par ledit boîtier 1. Ce mécanisme de frein comprend au moins une paire de cônes, l'un, représenté en 71 aux figures, dit cône mâle, solidaire en rotation de l'arbre portant le mécanisme 7 de frein, l'autre, dit cône femelle, représenté en 72, monté fixe en rotation par rapport audit arbre. Le cône 72 femelle affecte la forme d'une roue à alésage axial à portée conique et le cône 71 mâle de forme générale tronconique est évidé centralement pour pouvoir être enfilé sur ledit corps.

Dans les exemples représentés, le mécanisme 7 de frein comporte deux paires de pièces à surface conique, c'est-à-dire deux paires de cônes formées chacune d'un cône mâle et d'un cône femelle. Les moyens de freinage et d'inversion de sens sont équipés chacun d'une commande portée par le boîtier. La commande 8 de frein est couplable à un organe 81 de commande de frein actionnable par l'opérateur et formé ici par une pédale de frein pour le passage de la commande de frein de la position non freinée à l'état relâché de la pédale à une position freinée, dite première position de freinage, à l'état appuyé de ladite pédale. La commande 6 d'inversion de sens, également portée par le boîtier, est également couplable à un organe 611 de commande d'inversion de sens actionnable par l'opérateur et formée ici par un levier à trois positions. Cette commande d'inversion de sens est donc apte, lors de l'actionnement du levier 611, à passer de la position neutre à la position marche avant ou à la position marche arrière, et de la position marche avant ou marche arrière à la position neutre.

De manière caractéristique à l'invention, la commande 8 de frein présente une deuxième position de freinage distincte de la première position de freinage. L'ensemble de transmission comprend d'une part des moyens 83 de rappel aptes, en position neutre de la commande 6 d'inversion de sens, à rappeler ladite commande 8 de frein en deuxième position de freinage, et d'autre part des moyens d'entraînement en déplacement de la commande 8 de frein de la deuxième position de freinage à la position non freinée, ces moyens d'entraînement en déplacement de la commande de frein étant formés au moins partiellement par la commande 6 d'inversion de sens active sur ladite commande 8 de frein, à l'encontre des moyens 83 de rappel lors du passage de ladite commande 6 d'inversion de sens de la position neutre à la position marche avant ou marche arrière.

Dans les exemples représentés, la commande 8 de frein comprend une pièce 81 mobile commandée formée d'un levier pivotant couplable par un moyen de transmission de mouvement à la pédale 810 de frein pour le passage dudit levier pivotant de la position non freinée à la première position de freinage. La commande 6 d'inversion de sens comprend une pièce 61 mobile commandée formée par une came, rotative ou linéaire, couplable par un moyen de transmission de mouvement au levier 611 d'inversion de sens pour le passage de la came 61 d'une position à une autre.

Le levier 81 pivotant et la came 61 sont montés à rotation autour d'axes parallèles.

La commande 8 de frein comprend encore une fourchette 82 à deux branches couplée de manière solidaire en rotation à la pièce 81 mobile commandée, chaque branche de la fourchette 82 étant munie d'une dent radiale interne formant la partie active de la fourchette positionnable au voisinage d'au moins l'un desdits cônes 71, 72 pour un déplacement desdits cônes 71, 72 en rapprochement.

Dans le détail, le mécanisme 7 de frein comporte une commande 9 supplémentaire, dite additionnelle, actionnable par l'opérateur entre une position inactive et une position active, cette commande 9 additionnelle étant, au cours de son activation, apte, en deuxième position de freinage de la commande 8 de frein, à coopérer avec la commande 8 de frein, pour le passage de la commande 8 de frein de la deuxième position de freinage à la position non freinée.

La commande 8 de frein est disposée, au moins partiellement, sur la trajectoire suivie par la commande 9 additionnelle au cours de son activation, pour permettre, parallèlement à l'activation de la commande 9 additionnelle, le passage de la commande 8 de frein de la deuxième position de freinage à la position non freinée par simple contact d'appui.

Comme mentionné ci-dessus, le mécanisme 7 de frein, monté sur l'arbre 3 d'entrée ou l'arbre 4 de sortie ou un arbre des moyens de transmission entre arbre 3 d'entrée et arbre 4 de sortie, comprend au moins une paire de pièces, à surface coniques sensiblement coaxiales, aptes à être enfilées sur ledit arbre et montées l'une 71, dite cône 71 mâle, solidaire en rotation dudit arbre, l'autre, dite cône 72 femelle, fixe en rotation par rapport audit arbre, le cône 72 femelle affectant la forme d'une roue à alésage axial à portée conique et le cône 71 mâle, de préférence de forme générale tronconique, étant évidé centralement pour pouvoir être enfilé sur ledit corps. La commande 8 de frein est apte à commander les cônes 71, 72 en déplacement relatif axial dans le sens d'un rapprochement ou d'un écartement. Le cône 71 mâle est, en position rapprochée desdits cônes, correspondant à la position de freinage, logé à l'intérieur de l'alésage axial du cône 72 femelle, avec sa surface périphérique externe conique en prise, par contact d'appui, avec la portée conique du cône 72 femelle.

La commande 8 de frein et la commande 6 d'inversion de sens comprennent chacune au moins une pièce 81, 61 mobile dite commandée. Lesdites pièces 81, 61 mobiles commandées sont respectivement couplables par un moyen de transmission de mouvement l'une, 81, à l'organe 810 de commande de frein actionnable par l'opérateur, l'autre 61, à un organe 611 de commande d'inversion de sens actionnable par l'opérateur.

La pièce 61 mobile commandée de la commande 6 d'inversion de sens est une came 61 linéaire ou rotative et la pièce 81 mobile commandée de la commande 8 de frein est un levier 81 pivotant sollicité par les moyens 83 de rappel de la commande 8 de frein dans une position d'appui contre le profil externe de la came 61. Ladite came 61 est conformée pour, au cours de son déplacement de la position neutre vers la position marche avant ou la position marche arrière, agir, à l'encontre des moyens 83 de rappel, sur le levier 81, dans le sens d'un déplacement du levier 81.

Dans le détail, les cônes femelles du mécanisme de frein sont interposés entre les cônes mâles et sont commandés en déplacement par la fourchette 82 disposée entre lesdits cônes femelles. Les cônes mâles sont bridés en écartement et définissent entre eux un intervalle de longueur maximale fixe à l'intérieur duquel sont logés les cônes femelles, la fourchette formant un écarteur interposé entre lesdits cônes femelles. Les cônes mâles sont reliés entre eux par l'intermédiaire de tiges parallèles le long desquelles les cônes mâles coulissent dans le sens d'un rapprochement ou d'un écartement l'un de l'autre, les tiges étant pourvues à chacune de leurs extrémités d'une butée axiale formant moyen de bridage en écartement des cônes.

Les cônes femelles sont commandés en déplacement axial et immobilisés en rotation par la fourchette commune. Les roues constitutives des cônes femelles portent, sur leur face en regard, des dents formant une rainure circulaire. Les dents desdites crénelures s'interpénètrent en ménageant entre elles un espace d'insertion d'une partie, dite partie active de commande, de la fourchette commune. Chaque branche de la fourchette est munie d'une dent radiale interne formant la partie active de commande de ladite fourchette.

Le levier 81 pivotant commandé de la commande 8 de frein est apte à occuper une deuxième position de freinage distincte de la première position de freinage et est rappelé en deuxième position de freinage par un ressort. Les première et deuxième positions de freinage s'étendent de part et d'autre de la position non freinée. Le levier 81 pivotant est donc entraîné en rotation dans un sens lors de l'actionnement de la pédale de frein pour le passage en première position de freinage et dans un sens opposé par les moyens 83 de rappel pour être apte, en position neutre de la came d'inversion de sens, à occuper la deuxième position de freinage dans laquelle ledit levier 81 est en appui contre le profil externe de la came d'inversion de sens. Ce profil de la came 61 est tel que la came 61 provoque, par contact d'appui sur le levier 81, au cours de son passage de la position neutre à la position marche avant ou marche arrière, le passage du levier de la deuxième position de freinage à la position non freinée. Dans chacune des première et deuxième positions de freinage de la commande de frein, la fourchette de ladite commande joue le rôle d'un écarteur des cônes femelles qui se rapprochent des cônes mâles. En position non freinée, la fourchette occupe, entre les cônes mâles, une position qui autorise l'écartement de chaque cône femelle du cône mâle associé.

Grâce à cette architecture, telle que décrite ci-dessus, la commande de frein revient automatiquement, sous l'action des moyens de rappel, en deuxième position de freinage lorsque la came est en position neutre sans que le conducteur n'ait à se préoccuper de quoi que ce soit. Comme mentionné ci-dessus, le mécanisme 7 de frein comporte une commande 9 supplémentaire, dite additionnelle, actionnable par l'opérateur entre une position inactive et une position active, cette commande 9 additionnelle étant, au cours de son activation, apte, en deuxième position de freinage de la commande 8 de frein, à coopérer avec la commande 8 de frein, pour le passage de la commande 8 de frein de la deuxième position de freinage à la position non freinée.

La commande 8 de frein est disposée, au moins partiellement, sur la trajectoire suivie par la commande 9 additionnelle au cours de son activation, pour permettre, parallèlement à l'activation de la commande 9 additionnelle, le passage de la commande 8 de frein de la deuxième position de freinage à la position non freinée par simple contact d'appui.

Dans les exemples représentés, la commande 9 additionnelle comprend une pièce montée mobile entre une position inactive et une position active. Cette pièce est formée par un levier pivotant. Cette pièce mobile est apte à être couplée à un organe de transmission de mouvement allongé de type tringle actionnable par un opérateur positionné à l'extérieur de l'engin, de préférence derrière l'engin pour le passage de ladite pièce d'une position à une autre. Au moins une partie de la commande 8 de frein est disposée sur la trajectoire suivie par ladite commande 9 additionnelle lors de son activation. En l'occurrence, le levier pivotant constitutif de la commande 9 additionnelle est équipé d'un plot venant en appui contre le levier pivotant de la commande 8 de frein lors du passage de la commande 9 additionnelle d'une position inactive à une position active pour ramener le levier 81 pivotant de ladite commande 8 de frein en position non freinée. La commande 9 additionnelle est ramenée en position inactive par actionnement de la pédale de frein qui entraîne le levier 81 pivotant de ladite commande 8 de frein en première position de freinage. Dans cette première position de freinage, le levier 81 pivotant ne forme plus un obstacle au retour de la commande additionnelle en position inactive comme cela est le cas en position non freinée dudit levier.

L'ensemble de transmission comporte encore un arbre 2, dit menant, apte à être entraîné en rotation par l'arbre 21 primaire moteur. Cet arbre 2 menant est relié audit arbre 3 d'entrée formant l'arbre mené par une transmission 11 sans fin à courroie. Entre l'arbre 2 menant et l'arbre 4 de sortie, est disposé un mécanisme 10 d'embrayage équipé d'une commande 12 d'embrayage montée mobile entre au moins une position embrayée et une position débrayée. La commande 6 d'inversion de sens forme, en position neutre de ladite commande, un moyen de blocage de la commande 12 d'embrayage apte à empêcher le passage de la commande 12 d'embrayage de la position débrayée à la position embrayée, et la commande 12 d'embrayage forme, en position embrayée de la commande 12 d'embrayage, un moyen de verrouillage de la commande 6 d'inversion de sens apte à empêcher le passage de la commande 6 d'inversion de sens de la position marche avant ou marche arrière à la position neutre.

Cette disposition permet d'imposer une cinématique de fonctionnement. Dans l'exemple représenté, la commande 12 d'embrayage comprend une pièce 120 mobile commandée, en l'occurrence un levier 120 pivotant, portée par le boîtier 1, et couplable par un moyen de transmission de mouvement à un organe 121 de commande d'embrayage actionnable par l'opérateur et formé ici par une pédale d'embrayage. Ce levier 120 pivotant commandé est équipé d'un organe de verrouillage mâle formé par un plot surmontant ledit levier. La came 61 commandée de la commande d'inversion de sens est équipée de deux organes de verrouillage femelles formés par des encoches ménagées sur le profil externe de la came 61. La came 61 d'inversion de sens commandé forme, en position neutre, au niveau de l'espace laissé libre entre deux encoches, une butée de limitation en déplacement angulaire du levier 120 pivotant de la commande d'embrayage tandis que le plot 122 de verrouillage du levier 120 pivotant de la commande d'embrayage vient, en position marche avant ou marche arrière de la came 61 d'inversion de sens commandé se loger dans une encoche de ladite came en position embrayée dudit levier 120. Il est donc nécessaire d'une part, d'amener la came en marche avant ou marche arrière pour pouvoir embrayer le levier, et d'autre part, de débrayer le levier pour ramener la came de la position marche avant ou marche arrière à la position neutre.

Dans les exemples représentés, le mécanisme 10 d'embrayage est intégré à la transmission 11 à courroie.

En particulier, la transmission 11 à courroie est du type à variation de vitesse et comprend deux poulies 110, 111 à flasques à écartement variable portées l'une 110 dite menante, par l'arbre 2 menant, l'autre 111, dite menée, par l'arbre 3 d'entrée et des moyens 112 de commande en rapprochement ou en écartement des flasques de la poulie 110 menante. Le mécanisme 10 d'embrayage comprend un organe 100 fou apte à coopérer avec le flasque 110A mobile de la poulie 110 menante commandée. Cet organe 100 fou, tel qu'un roulement, un galet, ou une bague, présente une surface montée libre à rotation sur l'arbre 2 porteur de la poulie 110 commandée et autour de laquelle s'enroule au moins partiellement la courroie en position écartée des flasques de la poulie 110 menante commandée de manière à empêcher toute transmission de mouvement entre arbres 2, 3 porte-poulie, le flasque 110A mobile de la poulie 110 menante commandée venant à recouvrement dudit organe 100 fou au cours du rapprochement des flasques de ladite poulie 110 pour permettre l'enroulement de la courroie à l'intérieur de la gorge ménagée par les flasques et autoriser le passage du variateur de vitesse d'une position débrayée à une position embrayée, la poursuite du rapprochement des flasques de la poulie 110 menante commandée permettant de faire varier à volonté la vitesse. Les moyens 112 de commande en rapprochement ou en écartement des flasques de la poulie 110 menante sont au moins partiellement communs à la commande 12 d'embrayage.

Dans les exemples représentés, le levier pivotant de la commande d'embrayage agit via des pièces relais sur le flasque mobile de la poulie menante pour l'entraîner dans le sens d'un rapprochement de l'autre flasque de la poulie.

Le fonctionnement d'un tel ensemble de transmission est le suivant :
On suppose que la commande d'inversion de sens est en position neutre. Le levier 81 pivotant de commande de frein est rappelé par le ressort 83 contre le profil externe de la came 61 de commande d'inversion de sens dans une position correspondant à une position de freinage appelée deuxième position de freinage. Le mécanisme de frein forme dans cette deuxième position de freinage l'équivalent d'un frein de parking.

Lorsque la came d'inversion de sens est commandée suite à une commande en marche avant ou marche arrière de l'engin par le conducteur, le levier 81 pivotant de commande de frein est ramené par contact d'appui de la came sur le levier 81 en position non freinée.

Si le conducteur de l'engin a besoin de freiner, il lui suffit d'actionner sa pédale de frein qui entraîne la commande de frein de la position non freinée à la première position de freinage.

Dès que le conducteur relâche sa pédale de frein, la commande de frein revient en position non freinée ou en deuxième position de freinage si la came d'inversion de sens est revenue en position neutre.

Le mécanisme 7 de frein comporte une commande 9 supplémentaire, dite additionnelle, actionnable par l'opérateur entre une position inactive et une position active, cette commande 9 additionnelle étant, au cours de son activation, apte, en deuxième position de freinage de la commande 8 de frein, à coopérer avec la commande 8 de frein, pour le passage de la commande 8 de frein de la deuxième position de freinage à la position non freinée.

En effet, si le poste de conduite de l'engin n'est plus accessible, il n'est plus possible de déplacer par poussée l'engin. Pour éviter un tel inconvénient, il est prévu une commande additionnelle. La commande 8 de frein est disposée au moins partiellement sur la trajectoire suivie par la commande 9 additionnelle au cours de son activation pour permettre parallèlement à l'activation de la commande 9 additionnelle, le passage de la commande 8 de frein de la deuxième position de freinage à la position non freinée par simple contact d'appui.

Dans les exemples représentés, la commande 9 additionnelle comprend une pièce en l'occurrence un levier pivotant monté mobile entre une position inactive et une position active. Ce levier est apte à être couplé à un organe de transmission de mouvement allongé, de type tringle, actionnable par l'opérateur positionné à l'extérieur de l'engin, généralement à l'arrière de l'engin, pour le passage de ladite pièce formée par le levier pivotant d'une position à une autre.

Au moins une partie de la commande 8 de frein est disposée sur la trajectoire suivie par la commande 9 additionnelle lors de son activation. En l'occurrence, le levier pivotant de la commande 9 additionnelle est équipé d'un plot qui vient en appui sur le levier 81 pivotant de la commande 8 de frein pour contraindre le levier 81 pivotant de la commande 8 de frein à passer de la deuxième position de freinage à la position non freinée par simple contact d'appui. Le retour du levier pivotant de la commande 9 additionnelle en position inactive s'opère par simple actionnement de la pédale de frein par l'opérateur.

Le fonctionnement de l'ensemble de transmission est tel que suit :
On suppose que la pédale d'embrayage et de variation de vitesse est en position non embrayée, que le levier d'inversion de sens est en position neutre et que la commande du mécanisme de frein est en deuxième position de freinage, la pédale de frein n'étant pas actionnée.

Le conducteur ne peut pas actionner son levier d'embrayage et de variation de vitesse en raison de la coopération entre commande d'embrayage et d'inversion de sens. Il doit donc actionner le levier d'inversion de sens pour passer en marche avant ou en marche arrière. Ceci amène la commande de frein en position non freinée et permet à la commande d'embrayage d'être actionnée.

Le conducteur actionne donc sa pédale d'embrayage et de variation de vitesse. Ceci verrouille la commande d'inversion de sens dans la position marche avant ou marche arrière sélectionnée.

S'il souhaite reculer alors qu'il était en mode fonctionnement marche avant, le conducteur doit relâcher la pédale d'embrayage et de variation de vitesse, ce qui permet de déverrouiller la commande d'inversion de sens, actionner le levier d'inversion de sens pour le ramener en position neutre, puis l'engager en position marche arrière. Il peut de nouveau embrayer et faire varier la vitesse.

Si à un moment quelconque au cours de l'avance ou du recul de l'engin il souhaite freiner, il lui suffit d'actionner la pédale de frein pour amener la commande de frein en première position de freinage.

## Revendications

1. Ensemble de transmission pour engin (20) automoteur, du type positionnable entre l'arbre (21) primaire moteur et les roues (22) dudit engin et comprenant un boîtier (1) de transmission équipé d'un arbre (3) d'entrée, apte à être entraîné en rotation par l'arbre (21) primaire suivant une seule et même direction, et un arbre (4) de sortie, tel que l'arbre d'entraînement des roues de l'engin, auquel le mouvement de l'arbre (3) d'entrée est apte à être transmis, un mécanisme (5) inverseur de sens d'entraînement en rotation de l'arbre (4) de sortie, un mécanisme (7) de frein de l'arbre (3) d'entrée et/ou de l'arbre (4) de sortie et/ou des moyens de transmission de mouvement entre l'arbre (3) d'entrée et l'arbre (4) de sortie, chaque mécanisme (5, 7) comportant une commande (6, 8), lesdites commandes (6, 8) d'inversion de sens et de frein portées par ledit boîtier (1), étant montées respectivement mobiles l'une (6), entre au moins trois positions, à savoir une position neutre, une position marche avant et une position marche arrière, l'autre (8), entre au moins une position dite première position de freinage et une position non freinée, ladite commande (8) de frein étant couplable à un organe (810) de commande de frein actionnable par l'opérateur, pour le passage de ladite commande (8) de frein de la position non freinée à ladite première position de freinage sous l'action dudit organe (810) de commande de frein actionnable par l'opérateur, **caractérisé en ce que** la commande (8) de frein présente une deuxième position de freinage distincte de la première position de freinage et **en ce que** l'ensemble de transmission comprend d'une part des moyens (83) de rappel, lesdits moyens (83) de rappel étant aptes, en position neutre de la commande (6) d'inversion de sens, à rappeler ladite commande (8) de frein en deuxième position de freinage, et d'autre part des moyens d'entraînement en déplacement de la commande (8) de frein de la deuxième position de freinage à la position non freinée, ces moyens d'entraînement en déplacement de la commande de frein étant formés au moins partiellement par la commande (6) d'inversion de sens active sur ladite commande (8) de frein, à l'encontre des moyens (83) de rappel lors du passage de ladite commande (6) d'inversion de sens de la position neutre à la position marche avant ou marche arrière.

2. Ensemble de transmission selon la revendication 1,
**caractérisé en ce que** le mécanisme (7) de frein comporte une commande (9) supplémentaire, dite additionnelle, actionnable par l'opérateur entre une position inactive et une position active, cette commande (9) additionnelle étant, au cours de son activation, apte, en deuxième position de freinage de la commande (8) de frein, à coopérer avec la commande (8) de frein, pour le passage de la commande (8) de frein de la deuxième position de freinage à la position non freinée.

3. Ensemble de transmission selon la revendication 2,
**caractérisé en ce que** la commande (8) de frein est disposée, au moins partiellement, sur la trajectoire suivie par la commande (9) additionnelle au cours de son activation, pour permettre, parallèlement à l'activation de la commande (9) additionnelle, le passage de la commande (8) de frein de la deuxième position de freinage à la position non freinée par simple contact d'appui.

4. Ensemble de transmission selon l'une des revendications précédentes,
**caractérisé en ce que** le mécanisme (7) de frein, monté sur l'arbre (3) d'entrée ou l'arbre (4) de sortie ou un arbre des moyens de transmission entre arbre (3) d'entrée et arbre (4) de sortie, comprend au moins une paire de pièces, à surface conique sensiblement coaxiales, aptes à être enfilées sur ledit arbre et montées l'une (71), dite cône (71) mâle, solidaire en rotation dudit arbre, l'autre, dite cône (72) femelle, fixe en rotation par rapport audit arbre, le cône (72) femelle affectant la forme d'une roue à alésage axial à portée conique et le cône (71) mâle, de préférence de forme générale tronconique, étant évidé centralement pour pouvoir être enfilé sur ledit corps, et **en ce que** la commande (8) de frein est apte à commander les cônes (71, 72) en déplacement relatif axial dans le sens d'un rapprochement ou d'un écartement, le cône (71) mâle étant, en position rapprochée desdits cônes, correspondant à la position de freinage, logé à l'intérieur de l'alésage axial du cône (72) femelle, avec sa surface périphérique externe conique en prise, par contact d'appui, avec la portée conique du cône (72) femelle.

5. Ensemble de transmission selon l'une des revendications précédentes,
**caractérisé en ce que** la commande (8) de frein et la commande (6) d'inversion de sens comprennent chacune au moins une pièce (81, 61) mobile dite commandée, lesdites pièces (81, 61) mobiles commandées étant respectivement couplables par un moyen de transmission de mouvement l'une, (81), à l'organe (810) de commande de frein actionnable par l'opérateur, l'autre (61), à un organe (611) de commande d'inversion de sens actionnable par l'opérateur.

6. Ensemble de transmission selon la revendication 5,
**caractérisé en ce que** la pièce (61) mobile commandée de la commande (6) d'inversion de sens est une came (61) linéaire ou rotative et **en ce que** la pièce (81) mobile commandée de la commande (8) de frein est un levier (81) pivotant sollicité par les moyens (83) de rappel de la commande (8) de frein dans une position d'appui contre le profil externe de la came (61), ladite came (61) étant conformée pour, au cours de son déplacement de la position neutre vers la position marche avant ou la position marche arrière, agir, à l'encontre des moyens (83) de rappel, sur le levier (81), dans le sens d'un déplacement du levier (81).

7. Ensemble de transmission selon la revendication 6,
**caractérisé en ce que** le levier (81) pivotant et la came (61) sont montés à rotation autour d'axes parallèles.

8. Ensemble de transmission selon l'une des revendications 5 à 7 prise en combinaison avec la revendication 4,
**caractérisé en ce que** la commande (8) de frein comprend encore une fourchette (82) à deux branches couplée de manière solidaire en rotation à la pièce (81) mobile commandée, chaque branche de la fourchette (82) étant munie d'une dent radiale interne formant la partie active de la fourchette positionnable au voisinage d'au moins l'un desdits cônes (71, 72) pour un déplacement desdits cônes (71, 72) en rapprochement.

9. Ensemble de transmission selon l'une des revendications précédentes,
**caractérisé en ce que** le mécanisme (5) inverseur de sens porté par l'un des arbres, de préférence l'arbre (3) d'entrée, comprend deux éléments (51, 52) de crabot dits l'un (51), crabot marche avant, l'autre (52), crabot marche arrière, et un crabot (53) mobile interposé entre les éléments (51, 52) de crabot marche avant et marche arrière, lesdits éléments (51, 52) de crabot marche avant et marche arrière étant montés couplables/désaccouplables en rotation de l'arbre (3) qui les porte par l'intermédiaire du crabot (53) monté mobile axialement sur ledit arbre (3) à l'aide de la commande (6) d'inversion de sens pour pouvoir occuper une position marche avant dans laquelle le crabot (53) mobile est en prise avec l'élément (51) de crabot marche avant, une position marche arrière dans laquelle le crabot (53) mobile est en prise avec l'élément (51) de crabot marche arrière ou une position neutre dans laquelle le crabot (53) mobile n'est en prise avec aucun des éléments (51, 52) de crabot marche avant ou marche arrière.

10. Ensemble de transmission selon l'une des revendications précédentes,
**caractérisé en ce que** l'ensemble de transmission comporte encore un arbre (2) dit menant apte à être entraîné en rotation par l'arbre (21) primaire moteur, cet arbre (2) menant étant relié audit arbre (3) d'entrée formant l'arbre mené par une transmission (11) sans fin à courroie et, disposé entre l'arbre (2) menant et l'arbre (4) de sortie, un mécanisme (10) d'embrayage équipé d'une commande (12) d'embrayage montée mobile entre au moins une position embrayée et une position débrayée, **en ce que** la commande (6) d'inversion de sens forme, en position neutre de ladite commande, un moyen de blocage de la commande (12) d'embrayage apte à empêcher le passage de la commande (12) d'embrayage de la position débrayée à la position embrayée, et **en ce que** la commande (12) d'embrayage forme, en position embrayée de la commande (12) d'embrayage, un moyen de verrouillage de la commande (6) d'inversion de sens apte à empêcher le passage de la commande (6) d'inversion de sens de la position marche avant ou marche arrière à la position neutre.

11. Ensemble de transmission selon la revendication 10 prise en combinaison avec la revendication 5,
**caractérisé en ce que** la commande (12) d'embrayage comprend au moins une pièce (120) mobile commandée, portée par le boîtier (1), et couplable par un moyen de transmission de mouvement à un organe (121) de commande d'embrayage actionnable par l'opérateur, et **en ce que** les pièces (120, 61) mobiles commandées de la commande (12) d'embrayage et de la commande (6) d'inversion de sens sont munies respectivement l'une (12), d'un organe (122) de verrouillage, l'autre (6), de deux organes (610) de verrouillage complémentaires aptes à coopérer alternativement avec l'organe (122) de verrouillage de la commande (12) d'embrayage, en fonction de la position marche avant ou marche arrière de la commande (6) d'inversion de sens.

12. Ensemble de transmission selon l'une des revendications 10 ou 11,
**caractérisé en ce que** le mécanisme (10) d'embrayage est intégré à la transmission (11) à courroie.

13. Ensemble de transmission selon la revendication 12,
**caractérisé en ce que** la transmission (11) à courroie est du type à variation de vitesse et comprend deux poulies (110, 111) à flasques à écartement variable portées l'une (110), dite menante, par l'arbre (2) menant, l'autre (111), dite menée, par l'arbre (3) d'entrée et des moyens (112) de commande en rapprochement ou en écartement des flasques de la poulie (110) menante, **en ce que** le mécanisme (10) d'embrayage comprend un organe (100) fou apte à coopérer avec le flasque (110A) mobile de la poulie (110) menante commandée, cet organe (100) fou, tel qu'un roulement, un galet, ou une bague, présentant une surface montée libre à rotation sur l'arbre (2) porteur de la poulie (110) commandée et autour de laquelle s'enroule au moins partiellement la courroie en position écartée des flasques de la poulie (110) menante commandée de manière à empêcher toute transmission de mouvement entre arbres(2, 3) porte-poulie, le flasque (110A) mobile de la poulie (110) menante commandée venant à recouvrement dudit organe (100) fou au cours du rapprochement des flasques de ladite poulie (110) pour permettre l'enroulement de la courroie à l'intérieur de la gorge ménagée par les flasques et autoriser le passage du variateur de vitesse d'une position débrayée à une position embrayée, la poursuite du rapprochement des flasques de la poulie (110) menante commandée autorisant la variation à volonté de la vitesse, et **en ce que** les moyens (112) de commande en rapprochement ou en écartement des flasques de la poulie (110) menante sont au moins partiellement communs à la commande (12) d'embrayage.

14. Engin (20) automoteur du type comprenant un arbre (21) primaire moteur, des roues (22), et un ensemble de transmission disposé entre l'arbre (21) primaire moteur et les roues (22),
**caractérisé en ce que** l'ensemble de transmission est conforme à l'une des revendications 1 à 13.

## Patentansprüche

1. Getriebeanordnung für selbstfahrende Maschine (20) der Bauart, die zwischen der Hauptmotorwelle (21) und den Rädern (22) der Maschine positionierbar ist und ein Getriebegehäuse (1), ausgestattet mit einer Eingangswelle (3), die imstande ist, von der Hauptwelle (21) in einer einzigen und selben Richtung rotierend angetrieben zu sein, und einer Ausgangswelle (4), wie die Antriebswelle der Räder der Maschine, auf welche die Bewegung der Eingangswelle (3) übertragbar ist, einen Umkehrmechanismus (5) der Rotationsantriebsrichtung der Ausgangswelle (4), einen Bremsmechanismus (7) der Eingangswelle (3) und/oder der Ausgangswelle (4) und/oder der Bewegungsübertragungsmittel zwischen der Eingangswelle (3) und der Ausgangswelle (4) umfasst, wobei jeder Mechanismus (5, 7) eine Steuerung (6, 8) umfasst, wobei die von dem Gehäuse (1) getragenen Richtungsumkehr- und Bremssteuerungen (6, 8) jeweils beweglich, die eine (6) zwischen mindestens drei Positionen, nämlich einer neutralen Position, einer Vorwärtsfahrtposition und einer Rückwärtsfahrtposition, die andere (8) zwischen mindestens einer sogenannten ersten Bremsposition und einer nicht gebremsten Position, montiert sind, wobei die Bremssteuerung (8) für den Übergang der Bremssteuerung (8) aus der nicht gebremsten Position in die erste Bremsposition unter der Wirkung des von dem Bediener betätigbaren Bremssteuerungsorgans (810) an ein von dem Bediener betätigbares Bremssteuerungsorgan (810) koppelbar ist,
**dadurch gekennzeichnet, dass** die Bremssteuerung (8) eine zweite Bremsposition aufweist, die sich von der ersten Bremsposition unterscheidet und dass die Getriebeanordnung zum einen Rückstellmittel (83), wobei die Rückstellmittel (83) imstande sind, in neutraler Position der Richtungsumkehrsteuerung (6), die Bremssteuerung (8) in zweite Bremsposition zurückzustellen, und zum anderen Antriebsmittel der Verlagerung der Bremssteuerung (8) aus der zweiten Bremsposition in die nicht gebremste Position umfasst, wobei diese Antriebsmittel der Verlagerung der Bremssteuerung mindestens zum Teil von der auf die Bremssteuerung (8) gegen die Rückstellmittel (83) beim Übergang der Richtungsumkehrsteuerung (6) aus der neutralen Position in die Vorwärts- oder Rückwärtsfahrtposition aktiven Richtungsumkehrsteuerung (6) gebildet sind.

2. Getriebeanordnung nach Anspruch 1,
**dadurch gekennzeichnet, dass** der Bremsmechanismus (7) eine zusätzliche, sogenannte weitere Steuerung (9) aufweist, die vom Bediener zwischen einer inaktiven Position und einer aktiven Position betätigbar ist, wobei diese zusätzliche Steuerung (9) während ihrer Aktivierung imstande ist, in zweiter Bremsposition der Bremssteuerung (8) mit der Bremssteuerung (8) für den Übergang der Bremssteuerung (8) aus der zweiten Bremsposition in die nicht gebremsten Position zusammenzuwirken.

3. Getriebeanordnung nach Anspruch 2,
**dadurch gekennzeichnet, dass** die Bremssteuerung (8) mindestens zum Teil auf der von der zusätzlichen Steuerung (9) während ihrer Aktivierung verfolgten Bahn angeordnet ist, um parallel zur Aktivierung der zusätzlichen Steuerung (9) den Übergang der Bremssteuerung (8) aus der zweiten Bremsposition in die nicht gebremste Position durch einfachen Stützkontakt zu erlauben.

4. Getriebeanordnung nach einem der vorangehenden Ansprüche,
**dadurch gekennzeichnet, dass** der auf der Eingangswelle (3) oder der Ausgangswelle (4) oder einer Welle der Übertragungsmittel zwischen Eingangswelle (3) und Ausgangswelle (4) montierte Bremsmechanismus (7) mindestens ein Paar Teile mit etwa koaxialer konischer Oberfläche umfasst, die imstande sind, auf der Welle angereiht zu sein und, das eine, (71), als männlicher Konus (71) bezeichnet, in Rotation mit der Welle fest verbunden, das andere, als weiblicher Konus (72) bezeichnet, in Rotation in Bezug auf die Welle fest montiert zu sein, wobei der weibliche Konus (72) die Form eines Rads mit axialer Bohrung mit konischem Sitz hat und der vorzugsweise allgemein kegelstumpfförmige männliche Konus (71) zentral ausgehöhlt ist, um auf dem Körper angereiht zu sein, und dass die Bremssteuerung (8) imstande ist, die Konen (71, 72) in relativer axialer Verlagerung in Richtung einer Annäherung oder Beabstandung zu steuern, wobei der männliche Konus (71) in angenäherter Position der Konen, die der Bremsposition entspricht, mit seiner konischen äußeren peripheren Oberfläche durch Stützkontakt in Eingriff mit dem konischen Sitz des weiblichen Konus (72) in der axialen Bohrung des weiblichen Konus (72) ruht.

5. Getriebeanordnung nach einem der vorangehenden Ansprüche,
**dadurch gekennzeichnet, dass** die Bremssteuerung (8) und die Richtungsumkehrsteuerung (6) jeweils mindestens ein bewegliches, sogenanntes gesteuertes Teil (81, 61) umfassen, wobei die beweglichen gesteuerten Teile (81, 61) jeweils von einem Bewegungsübertragungsmittel, das eine, (81), an das von dem Bediener betätigbaren Bremssteuerungsorgan (810), das andere, (61), an ein von dem Bediener betätigbaren Richtungsumkehrsteuerungsorgan (611), koppelbar sind.

6. Getriebeanordnung nach Anspruch 5,
**dadurch gekennzeichnet, dass** das bewegliche gesteuerte Teil (61) der Richtungsumkehrsteuerung (6) ein linearer oder rotierender Nocken (61) ist und dass das bewegliche gesteuerte Teil (81) der Bremssteuerung (8) ein Schwenkhebel (81) ist, der von den Rückstellmitteln (83) der Bremssteuerung (8) in eine Stützposition gegen das äußere Profil des Nockens (61) beansprucht wird, wobei der Nocken (61) ausgebildet ist, um während seiner Verlagerung aus der neutralen Position in die Vorwärtsfahrtposition oder die Rückwärtsfahrtposition gegen Rückstellmittel (83) auf den Hebel (81) in Richtung einer Verlagerung des Hebels (81) zu wirken.

7. Getriebeanordnung nach Anspruch 6,
**dadurch gekennzeichnet, dass** der Schwenkhebel (81) und der Nocken (61) um parallele Achsen rotierend montiert sind.

8. Getriebeanordnung nach einem der Ansprüche 5 bis 7, herangezogen in Kombination mit Anspruch 4,
**dadurch gekennzeichnet, dass** die Bremssteuerung (8) weiterhin eine Gabel (82) mit zwei Schenkeln umfasst, die in Rotation fest verbunden an das bewegliche gesteuerte Teil (81) gekoppelt ist, wobei jeder Schenkel der Gabel (82) mit einem internen radialen Zahn ausgestattet ist, der den aktiven Teil der Gabel bildet, der in der Nähe von mindestens einem der Konen (71, 72) für eine angenäherte Verlagerung der Konen (71, 72) positionierbar ist.

9. Getriebeanordnung nach einem der vorangehenden Ansprüche,
**dadurch gekennzeichnet, dass** der von einer der Wellen, vorzugsweise der Eingangswelle (3), getragene Richtungsumkehrmechanismus (5) zwei Klauenelemente (51, 52), bezeichnet, das eine, (51), als Vorwärtsfahrklaue, das andere, (52), als Rückwärtsfahrklaue, und eine bewegliche Klaue (53) zwischen den Vorwärts- und Rückwärtsfahrklauenelementen (51, 52) umfasst, wobei die Vorwärts-und Rückwärtsfahrklauenelemente (51, 52) von der sie tragenden Welle (3) mittels der auf der Welle (3) mit Hilfe der Richtungsumkehrsteuerung (6) axial beweglich montierten Klaue (53) in Rotation koppelbar/entkoppelbar montiert sind, um eine Vorwärtsfahrtposition, in welcher die bewegliche Klaue (53) mit dem Vorwärtsfahrklauenelement (51) in Eingriff ist, eine Rückwärtsfahrtposition, in welcher die bewegliche Klaue (53) mit dem Rückwärtsfahrklauenelement (51) in Eingriff ist, oder eine neutrale Position, in welcher die bewegliche Klaue (53) mit keinem der Vorwärts- und Rückwärtsfahrklauenelemente (51, 52) in Eingriff ist, einnehmen zu können.

10. Getriebeanordnung nach einem der vorangehenden Ansprüche,
**dadurch gekennzeichnet, dass** die Getriebeanordnung weiterhin eine sogenannte führende Welle (2) aufweist, die imstande ist, von der Hauptmotorwelle (21) rotierend angetrieben zu sein, wobei diese führende Welle (2) mit der Eingangswelle (3), die die geführte Welle bildet, durch einen Riemenschneckentrieb (11) verbunden ist und, zwischen der führenden Welle (2) und der Ausgangswelle (4) angeordnet, einen Kupplungsmechanismus (10), der mit einer Kupplungssteuerung (12) ausgestattet ist, die zwischen mindestens einer eingekuppelten Position und einer ausgekuppelten Position beweglich montiert ist, dass die Richtungsumkehrsteuerung (6) in neutraler Position der Steuerung ein Blockademittel der Kupplungssteuerung (12) bildet, das imstande ist, den Übergang der Kupplungssteuerung (12) aus der ausgekuppelten Position in die eingekuppelte Position zu verhindern, und dass die Kupplungssteuerung (12) in eingekuppelter Position der Kupplungssteuerung (12) ein Verriegelungsmittel der Richtungsumkehrsteuerung (6) bildet, das imstande ist, den Übergang der Richtungsumkehrsteuerung (6) aus der Vorwärts- oder Rückwärtsfahrtposition in die neutrale Position zu verhindern.

11. Getriebeanordnung nach Anspruch 10, herangezogen in Kombination mit Anspruch 5,
**dadurch gekennzeichnet, dass** die Kupplungssteuerung (12) mindestens ein bewegliches gesteuertes Teil (120) umfasst, das von dem Gehäuse (1) getragen wird und von einem Bewegungsübertragungsmittel an ein von dem Bediener betätigbares Kupplungssteuerorgan (121) koppelbar ist, und dass die beweglichen gesteuerten Teile (120, 61) der Kupplungssteuerung (12) und der Richtungsumkehrsteuerung (6) jeweils, die eine, (12), mit einem Verriegelungsorgan (122), die andere (6), mit zwei komplementären Verriegelungsorganen (610), die imstande sind, alternativ in Abhängigkeit von der Vorwärts- oder Rückwärtsfahrtposition der Richtungsumkehrsteuerung (6) mit dem Verriegelungsorgan (122) der Kupplungssteuerung (12) zusammenzuwirken, ausgestattet sind.

12. Getriebeanordnung nach einem der Ansprüche 10 oder 11,
**dadurch gekennzeichnet, dass** der Kupplungsmechanismus (10) in den Riementrieb (11) integriert ist.

13. Getriebeanordnung nach Anspruch 12,
**dadurch gekennzeichnet, dass** der Riementrieb (11) vom Typ Geschwindigkeitsänderung ist und zwei Scheiben (110, 111) mit variabel beabstandeten Wangen umfasst, die eine, (110), als führend bezeichnet, von der führenden Welle (2), die andere, (111), als geführt bezeichnet, von der Eingangswelle (3) getragen werden, und Steuermittel (112) der Annäherung oder Beabstandung der Wangen der führenden Scheibe (110), dass der Kupplungsmechanismus (10) ein Freilauforgan (100) umfasst, das imstande ist, mit der beweglichen Wange (110A) der gesteuerten führenden Scheibe (110) zusammenzuwirken, wobei dieses Freilauforgan (100) wie ein Lager, eine Rolle oder ein Ring, eine auf der tragenden Welle (2) der gesteuerten Scheibe (110) frei rotierend montierte Fläche aufweist und um welche sich in beabstandeter Position der Wangen der gesteuerten führenden Scheibe (110) der Trieb mindestens zum Teil wickelt, um jede Bewegungsübertragung zwischen Scheibenträgerwellen (2, 3) zu verhindern, wobei die bewegliche Wange (110A) der gesteuerten führenden Scheibe (110) während der Annäherung der Wangen der Scheibe (110) das Freilauforgan (100) bedeckt, um das Wickeln des Triebs im Innern der von den Wangen gebildeten Nut und den Übergang des Regelantriebs von einer ausgekuppelten Position in eine eingekuppelte Position zu erlauben, wobei die Fortsetzung der Annäherung der Wangen der gesteuerten führenden Scheibe (110) die beliebige Änderung der Geschwindigkeit erlaubt, und dass die Steuermittel (112) der Annäherung oder Beabstandung der Wangen der führenden Scheibe (110) mindestens zum Teil mit der Kupplungssteuerung (12) gemeinsam sind.

14. Selbstfahrende Maschine (20) der Bauart, die eine Hauptmotorwelle (21), Räder (22) und eine zwischen der Hauptmotorwelle (21) und den Rädern (22) angeordnete Getriebeanordnung umfasst,
**dadurch gekennzeichnet, dass** die Getriebeanordnung nach einem der Ansprüche 1 bis 13 ist.

## Claims

1. A transmission assembly for a self-propelled machine (20), of the type that can be positioned between the primary motor shaft (21) and the wheels (22) of said machine and comprising a transmission case (1) equipped with an input shaft (3), capable of being rotated by the primary shaft (21) in a single and same direction, and an output shaft (4), such as the driveshaft of the wheels of the machine, to which the movement of the input shaft (3) is capable of being transmitted, a mechanism (5) reversing the rotation direction of the output shaft (4), a mechanism (7) braking the input shaft (3) and/or the output shaft (4) and/or means for transmitting movement between the input shaft (3) and the output shaft (4), each mechanism (5, 7) including a command (6, 8), said direction reversal and braking commands (6, 8) supported by said case (1) being respectively mounted such that one (6) is movable between at least three positions, namely a neutral position, a forward position and reverse position, and the other (8) is movable between at least a so-called first braking position and a non-braking position, said braking command (8) being able to be coupled to a brake command member (810) that can be actuated by the operator, for the passage of said brake command (8) from the non-braked position to said first braking position under the action of said brake command member (810) able to be actuated by the operator,
**characterized in that** the brake command (8) has a second braking position separate from the first braking position and **in that** the transmission assembly comprises return means (83) on the one hand, said return means (83) being capable, in the neutral position of the direction reversal command (6), of returning said braking command (8) to the second braking position, and on the other hand, means driving the movement of the braking command (8) from the second braking position to the non-braked position, these movement-driving means of the brake command being formed at least partially by the direction reversal command (6) active on said brake command (8), against return means (83) during the passage of said direction reversal command (6) from its neutral position to the forward or reverse position.

2. The transmission assembly according to claim 1,
**characterized in that** the braking mechanism (7) includes a supplementary command (9), called additional command, that can be actuated by the operator between an inactive position and an active position, this additional command (9) being able, during its activation, in the second braking position of the brake command (8), to cooperate with the brake command (8), for the passage of the brake command (8) from the second braking position to the non-braking position.

3. The transmission assembly according to claim 2,
**characterized in that** the brake command (8) is positioned, at least partially, on the trajectory followed by the additional command (9) during its activation, to allow, in parallel with the activation of the additional command (9), the passage of the brake command (8) from the second braking position to the non-braking position by simple bearing contact.

4. The transmission assembly according to one of the preceding claims,
**characterized in that** the braking mechanism (7), mounted on the input shaft (3) or the output shaft (4) or a shaft of the transmission means between the input shaft (3) and output shaft (4), comprises at least one pair of parts with a conical surface that are substantially coaxial, able to be slipped onto said shaft and one of which (71), called male cone (71), is mounted secured in rotation with said shaft, the other of which, called female cone (72), is fixed in rotation relative to said shaft, the female cone (72) assuming the form of a wheel with an axial bore with conical step and the male cone (71), preferably with a generally frustoconical shape, being hollowed out in its center to be able to be slipped onto said body, and **in that** the brake command (8) is able to command the cones (71, 72) in relative axial movement in the direction coming closer together or further apart, the male cone (71) being, in the closed position of said cones, corresponding to the braking position, housed inside the axial bore of the female cone (72), with its outer conical peripheral surface engaged, by bearing contact, with the conical step of the female cone (72).

5. The transmission assembly according to one of the preceding claims,
**characterized in that** the brake command (8) and the direction reversal command (6) each comprise at least one so-called commanded moving part (81, 61), said commanded moving parts (81, 61) respectively being able to be coupled by movement transmission means for one (81), to the brake command member (810) that can be actuated by the operator, and for the other (61), to a direction reversal command member (611) that can be actuated by the operator.

6. The transmission assembly according to claim 5,
**characterized in that** the commanded moving part (61) of the direction reversal command (6) is a linear or rotary cam (61) and **in that** the commanded moving part (81) of the brake command (8) is a pivoting lever (81) biased by the return means (83) returning the brake command (8) to a position bearing against the outer profile of the cam (61), said cam (61) being configured so as, during its movement from the neutral position toward the forward position or the reverse position, to act against return means (83), on the lever (81), in the direction of the movement of the lever (81).

7. The transmission assembly according to claim 6,
**characterized in that** the pivoting lever (81) and the cam (61) are rotatably mounted around parallel axes.

8. The transmission assembly according to one of claims 5 to 7 combined with claim 4,
**characterized in that** the brake command (8) further comprises a fork (82) coupled secured in rotation with the commanded moving part (81), each branch of the fork (82) being provided with an inner radial tooth forming the active part of the fork that will be positioned near at least one of said cones (71, 72) to move said cones (71, 72) closer together.

9. The transmission assembly according to one of the preceding claims,
**characterized in that** the direction reversal mechanism (5) supported by one of the shafts, preferably the input shaft (3), comprises two dog elements (51, 52), one (51) called forward dog, the other (52) called reverse dog, and a moving dog (53) inserted between the forward and reverse dog elements (51, 52), said forward and reverse dog elements (51, 52) being mounted so as to be able to be coupled/uncoupled in rotation to/from the shaft (3) that supports them by means of the dog (53) mounted axially movable on said shaft (3) using the direction reversal command (6) to be able to occupy a forward direction in which the moving dog (53) is engaged with the forward dog element (51), a reverse position in which the moving dog (53) is engaged with the reverse dog element (51), or a neutral position in which the moving dog (53) is not engaged with any of the forward or reverse dog elements (51, 52).

10. The transmission assembly according to one of the preceding claims,
**characterized in that** the transmission assembly further includes a so-called driving shaft (2) able to be rotated by the primary motor shaft (21), this driving shaft (2) being connected to said input shaft (3) forming the driven shaft driven by an endless belt transmission (11) and, positioned between the driving shaft (2) and the output shaft (4), a clutch mechanism (10) equipped with a clutch command (12) mounted so as to be movable between at least an engaged position and a disengaged position, **in that** the direction reversal command (6) forms, in the neutral position of said command, a means for blocking the clutch command (12) able to prevent the clutch command (12) from going from the disengaged position to the engaged position, and **in that** the clutch command (12) forms, in the engaged position of the clutch command (12), means for locking the direction reversal command (6) able to prevent the direction reversal command (6) from going from the forward or reverse position to the neutral position.

11. The transmission assembly according to claim 10 combined with claim 5,
**characterized in that** the engagement command (12) comprises at least one commanded moving part (120), supported by the case (1), and able to be coupled by a movement transmission means to an engagement command member (121) that can be actuated by the operator, and **in that** the commanded moving parts (120, 61) of the clutch command (12) and the direction reversal command (6) are respectively provided one (12) with a locking member (122), the other (6) with two complementary locking members (610) able to cooperate alternatively with the locking member (122) of the clutch control (12), as a function of the forward or reverse position of the direction reversal command (6).

12. The transmission assembly according to one of claims 10 or 11,
**characterized in that** the clutch mechanism (10) is integrated into the belt transmission (11).

13. The transmission assembly according claim 12,
**characterized in that** the transmission (11) is of the variable speed type and comprises two pulleys (110, 111) with variable spacing flanges, one of which (110), said to be driving, is supported by the driving shaft (2), the other of which (111), said to be driven, is supported by the input shaft (3) and means (112) commanding the approach or separation of the flanges of the driving pulley (110), **in that** the clutch mechanism (10) comprises an idler member (100) able to cooperate with the moving flange (110A) of the commanded driving pulley (110), this idler member (100), such as a rolling bearing, a roller, or a ring, having a surface mounted freely rotating on the shaft (2) carrying the controlled pulley (110) and around which the belt at least partially winds in the separated position of the flanges of the commanded driving pulley (110) so as to prevent any transmission of movement between pulley-bearing shafts (2, 3), the moving flange (110A) of the commanded driving pulley (110) overlapping said idler member (100) when the flanges of said pulley (110) are brought closer together to allow the winding of the belt inside the groove arranged by the flanges and the passage of the speed regulator from a disengaged position to an engaged position, the continued approach of the flanges of the commanded driving pulley (110) authorizing the speed variation at will, and **in that** the means (112) commanding the approach or separation of the flanges of the driving pulley (110) are at least partially shared with the clutch command (12).

14. A self-propelled machine (20) of the type comprising a primary motor shaft (21), wheels (22), and a transmission assembly arranged between the primary motor shaft (21) and the wheels (22),
**characterized in that** the transmission assembly is according to one of claims 1 to 13.
